# EUROPEAN PATENT APPLICATION

(11) **EP 4 559 642 A1**
(43) Date of publication of application: **28.05.2025**
(21) Application number: 23841794.3
(22) Date of filing: 30.03.2023
(51) Int. Cl.: B26B 19/04

(54) **FIXED BLADE AND MANUFACTURING METHOD THEREFOR**

(30) Priority: 18.07.2022 CN 202210842353
(71) Applicant: Zhejiang Haishun Electric Enterprises Ltd, Wenzhou, Zhejiang 325024 (CN)
(72) Inventor: ZHONG, Haiyong, Wenzhou, Zhejiang 325000 (CN)
(74) Representative: Bryn Aarflot AS
(86) International application number: PCT/CN2023/084933
(87) International publication number: WO 2024/016721

(57) **Abstract**

A fixed blade, comprising a base plate (1). A blade tooth group (2) consisting of a plurality of cutting teeth (21) is provided at the edge of at least one side of the base plate. A hollowed-out groove (3) is provided in the upper end face and/or the lower end face of the base plate, such that the thickness (T3) of each cutting tooth in the blade tooth group is less than the thickness (T2) of the base plate, and a tooth protrusion (4) is formed at the upper end face and/or the lower end face of the tooth tip of each cutting tooth in the blade tooth group. Also provided is a manufacturing method for the fixed blade. The upper end face and/or the lower end face of the base plate is provided with a hollowed-out groove and the hollowed-out groove is used to reduce the thickness of the cutting teeth so as to improve the hair trimming effect. Moreover, the hollowed-out groove also enables tooth protrusions to be formed at the upper end face and/or the lower end face of the tooth tips of the cutting teeth; the tooth protrusions can be used for protecting the skin and preventing the tooth tips of the cutting teeth being too sharp and scratching the skin, thus improving the safety of using the fixed blade; the tooth protrusions can also serve as a comb to stimulate skin nerves and to accelerate skin blood circulation and blood oxygen supply, thus making the skin feel comfortable, and improving the comfort of using the fixed blade.

## Description

The present application claims the priority to Chinese Patent Application No. 202210842353.0, titled "FIXED BLADE AND MANUFACTURING METHOD THEREFOR", filed with the China National Intellectual Property Administration on July 18, 2022, the entire disclosure of which is incorporated herein by reference.

### FIELD

The present application relates to hair trimming blades, and in particular to a fixed blade and a method for manufacturing the fixed blade.

### BACKGROUND

A fixed blade trims hair by primarily using a plurality of parallel blade teeth that are arranged at an edge of the shaving blade at intervals. Existing sheet material for the fixed blade generally has a thickness of 0.3 mm or above, in order to ensure the flatness and working strength of a cutting face of the fixed blade to avoid twisting and deformation from occurring in production and use. Though the use of relatively thick sheet material may prevent the twisting and deformation of the fixed blade during production and use to ensure the flatness and working strength of the cutting face of the fixed blade, the individual cutting teeth have a thickness same as the thickness of the sheet material, so that the length of the residual hair roots is long due to the thickness of the sheet material when hairs are trimmed, is unsatisfactory and cannot meet the needs of a user.

### SUMMARY

To solve the above technical problem, a fixed blade and a manufacturing method therefor are provided according to the present application. The innovative method for manufacturing the fixed blade not only can ensure the working strength of the fixed blade during production and use, but also can allow a thickness of each cutting tooth to be smaller than a thickness of the fixed blade so as to ensure the hair trimming effect during hair trimming.

To solve the above technical problem, a fixed blade is provided according to technical solutions of the present application, including a base sheet. A blade teeth set, which consists of multiple cutting teeth, is provided on an edge of at least one side of the base sheet. A material removal groove is provided on an upper end face and/or a lower end face of the base sheet, such that a thickness of each cutting tooth of the blade teeth set is smaller than a thickness of the base sheet, and such that a tooth protrusion is formed on an upper end face and/or a lower end face of a tooth tip of each cutting tooth of the blade teeth set.

Preferably, a height of the tooth protrusion is smaller than or equal to the thickness of the base sheet.

Preferably, the tooth protrusion includes an upper tooth protrusion and a lower tooth protrusion that are respectively provided on the upper end face and the lower end face of the tooth tip of each cutting tooth. Smooth transitions are respectively provided at a junction between the upper tooth protrusion and the cutting tooth, and at a junction between the lower tooth protrusion and the cutting tooth.

Preferably, a width of the upper tooth protrusion is smaller than a width of the lower tooth protrusion when viewed from a projection direction of the tooth tip of each cutting tooth.

Preferably, an outer surface of the base sheet is an arc surface when viewed from a projection direction of any one of two ends of the base sheet.

Preferably, the thickness of each cutting tooth of the blade teeth set is smaller than the thickness of the base sheet, and is larger than or equal to 0.08 mm.

Preferably, a depth of the material removal groove is smaller than the thickness of the base sheet.

Preferably, the blade teeth set is provided on the edge of each of two opposite sides of the base sheet, and has a length smaller than a length of the base sheet. Distances from two ends of the blade teeth set respectively to edges of two ends of the base sheet range from 3 mm to 10 mm.

Preferably, the material removal groove includes an upper material removal groove and a lower material removal groove. The upper material removal groove is provided on the outer surface of the base sheet, so that the upper tooth protrusion is formed on the upper end face of the tooth tip of each cutting tooth of the blade teeth set. The lower material removal groove is provided on an inner surface of the base sheet, so that the thickness of each cutting tooth of the blade teeth set is smaller than the thickness of the base sheet and the lower tooth protrusion is formed on the lower end face of the tooth tip of the cutting tooth of the blade teeth set.

To facilitate the production and manufacturing of the fixed blade, a method for manufacturing the fixed blade is further provided according to the present application, including the following steps:
a material selection step S1: selecting a metallic material, which is heat-treatable and has a thickness, according to user needs or design requirements;
a stamping step S2: feeding the metallic material into a stamping die, and stamping, by stamping equipment, the metallic material to form a fixed blade blank that has a size satisfying a requirement for the fixed blade and that has the material removal groove at an edge of at least one side of the fixed blade blank;
a heat treatment step S3: feeding the fixed blade blank into a heater for quenching to increase a hardness of the fixed blade blank;
a tooth cutting step S4: performing, by tooth cutting equipment, tooth cutting operation on a side of the material removal groove at the edge of the fixed blade blank, to form a semi-finished fixed blade with multiple cutting teeth formed on the side of the material removal groove and arranged at intervals;
a polishing step S5: rounding or chamfering, by polishing equipment, edges of the semi-finished fixed blade, and polishing, by polishing equipment, an outer surface of the semi-finished fixed blade; and
a grinding step S6: grinding the lower end face of each cutting tooth to form a cutting working surface and finally form a finished fixed blade.

Preferably, in step S1, a martensitic stainless steel is selected as the metallic material, and the martensitic stainless steel has a hardness ranging from 160 HV to 220 HV.

Preferably, a cleaning and drying step SA is further provided after the step S2 and before the step S3. In the cleaning and drying step, cleaning equipment removes oil contamination from a surface of the fixed blade blank, and drying equipment dries the surface of the fixed blade blank.

Preferably, the cleaning equipment is a three-tank ultrasonic cleaner. The cleaning and drying step SA includes the following steps: adding and evenly mixing 60 L to 100 L of pure water, 0.5 kg to 1.5 kg of degreasing powder, and 0.5 kg to 1.5 kg of metal cleaning agent in a first cleaning tank of the ultrasonic cleaner, heating to 55 °C to 80 °C, cleaning the fixed blade blank for 150 seconds to 200 seconds, and placing the fixed blade blank into a second cleaning tank; adding pure water into the second cleaning tank, heating to 30 °C to 35 °C, cleaning the fixed blade blank for 90 seconds to 150 seconds, and placing the fixed blade blank into a third cleaning tank; and adding pure water into the third cleaning tank, heating to 30 °C to 35 °C, cleaning the fixed blade blank for 90 seconds to 150 seconds, placing the fixed blade blank into a bellows dryer, and drying the fixed blade blank at a temperature of 40 °C to 80 °C for 30 minutes to 90 minutes.

Preferably, in the step S3, the heater is operated to quench the fixed blade blank so as to increase the hardness of the fixed blade blank to a range from 52 HRC to 60 HRC.

Preferably, the heater in the step S3 is a vacuum heat treatment furnace, and the step S3 includes: feeding the fixed blade blank into the vacuum heat treatment furnace, increasing a temperature in the furnace to 1000 °C to 1100 °C and keeping the temperature for 40 minutes to 100 minutes, then introducing nitrogen into the furnace, and cooling the fixed blade blank to a room temperature within 40 minutes to 80 minutes.

Preferably, the tooth cutting equipment in the step S4 is a grinder. A grit number of a tooth cutting wheel is between 220 grit and 260 grit, and a linear speed of the tooth cutting wheel is 30 meters per minute to 55 meters per minute.

Preferably, the polishing equipment in the step S5 is a cylinder polishing machine. During cylinder polishing, a cylinder rotation speed is 40 revolutions per minute to 90 revolutions per minute, and a cylinder polishing material is brown corundum having a size of 6 mm by 6 mm to 10 mm by 10 mm.

Preferably, in the step S6, a grinder is operated to grind the lower end face of each cutting tooth to form the cutting working surface on an inner surface of the semi-finished fixed blade. A flatness of the cutting working surface is less than or equal to 0.02, and a roughness of the cutting working surface is less than or equal to 0.6. A grit number of a grinding wheel is between 100 grit and 180 grit, and a linear speed of the grinding wheel during the grinding is 32 meters per minute to 36 meters per minute.

Preferably, another cleaning and drying step S7 is further provided after the step S6, and the another cleaning and drying step S7 is the same as the cleaning and drying step SA.

The present application has the following beneficial effects. The material removal groove is provided on the upper end face and/or the lower end face of each cutting tooth of the blade teeth set and on the upper end face and/or the lower end face of the base sheet, so as to ensure the working strength of the base sheet during production or use while enhancing the working performance of the fixed blade, and to reduce the thickness of the cutting teeth by forming the material removal groove so that the hair trimming effect is improved with relatively thin cutting teeth. Moreover, by providing the material removal groove, the tooth protrusion can be formed on the upper end face and/or the lower end face of the tooth tip of each cutting tooth of the blade teeth set. In use, the tooth protrusion can protect the skin by preventing the tooth tip of each cutting tooth from being excessively sharp to scratch the skin, thereby improving the safety of the fixed blade in use. Additionally, when the fixed blade is in fit contact with the skin, tooth protrusions at the tooth tips of the cutting teeth of the blade teeth set can serve as a comb to stimulate nerves in the head and enhance the blood circulation and blood oxygen supply of the scalp, thereby providing more comfortable skin feel and improving the comfort of use of the fixed blade.

### BRIEF DESCRIPTION OF THE DRAWINGS

FIG. 1 is a front view of a fixed blade according to an embodiment of the present application;
FIG. 2 is a perspective view of the fixed blade according to the embodiment of the present application;
FIG. 3 is a sectional structural view taken along a line A-A in FIG. 1;
FIG. 4 is a side view of the fixed blade according to the embodiment of the present application;
FIG. 5 is a sectional structural view of a fixed blade according to a second embodiment of the present application;
FIG. 6 is a sectional structural view of a fixed blade according to a third embodiment of the present application;
FIG. 7 is a processing flowchart of a method for manufacturing the fixed blade according to an embodiment of the present application; and
FIG. 8 is a diagram showing changes in a stamping step according to the embodiment of the present application.

### DETAILED DESCRIPTION OF THE EMBODIMENTS

The embodiment of the present application is further described hereinafter in conjunction with the accompanying drawings.

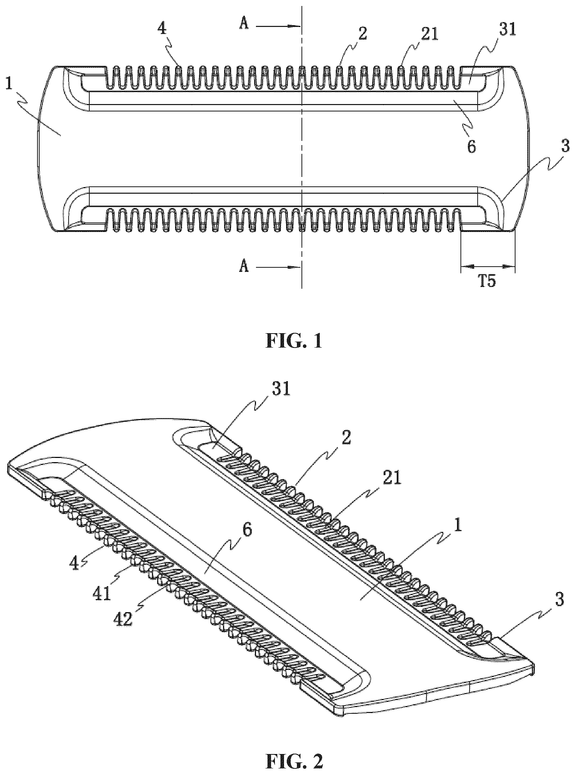

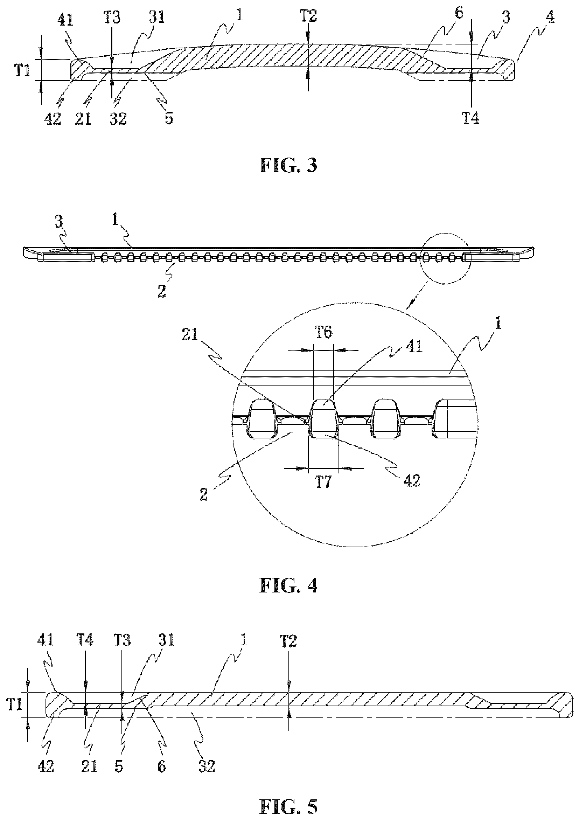

As shown in FIGS. 1 to 6, a fixed blade is provided according to the present application, including a base sheet 1. A blade teeth set 2, which consists of multiple cutting teeth 21, is provided on an edge of at least one side of the base sheet 1. A material removal groove 3 is provided on an upper end face and/or a lower end face of the base sheet 1, and a thickness T3 of each cutting tooth of the blade teeth set 2 is smaller than a thickness T2 of the base sheet. A tooth protrusion 4 is formed on an upper end face and/or a lower end face of a tooth tip of each cutting tooth 21 of the blade teeth set 2. Materials are removed from the upper end face and/or the lower end face of each cutting tooth 21 of the blade teeth set 2 by machining to form the material removal groove 3 on the upper end face and/or the lower end face of the base sheet 1. In this way, it is possible to ensure the working strength of the base sheet 1 during production or use and enhance the working performance of the fixed blade. Furthermore, the thickness of the cutting teeth 21 can be reduced by machining the material removal groove 3, and the hair trimming effect can be improved with relatively thin cutting teeth 21 in use of the fixed blade. Moreover, by machining the material removal groove 3, the tooth protrusion 4 can be formed on the upper end face and/or the lower end face of the tooth tip of each cutting tooth 21 of the blade teeth set 2. In use, the tooth protrusion 4 can protect the skin, specifically, prevent the tooth tip of the cutting tooth 21 from being excessively sharp to scratch the skin, thereby improving the safety of the fixed blade in use. Additionally, when the fixed blade is in contact with the skin, tooth protrusions 4 at the tooth tips of the cutting teeth 21 of the blade teeth set 2 can serve as a comb to stimulate nerves in the head and accelerate the blood circulation and blood oxygen supply of the scalp, thereby providing more comfortable skin feeling and improving the comfort of use of the fixed blade.

The machining may be performed by equipment including but not limited to a grinder, a computer numerical control machining center, a milling machine, a stamping press, a lathe, or powder metallurgy forming equipment. By machining, the material removal groove 3 is formed on a surface of the base sheet 1, such that the thickness T3 of each cutting tooth is different from the thickness T2 of the base sheet to improve the hair trimming effect. During the actual production process, the material removal groove 3 on an outer surface of the base sheet 1 may be integrally formed by a stamping process, and the material removal groove 3 on an inner surface of the base sheet 1 may be formed by grinding to reduce the thickness of each cutting tooth 21 of the blade teeth set 2. It may be noted that the material removal groove 3 may be formed by other equipment. The stamping and grinding processes are easy to implement and has high production efficiency, and therefore are preferred.

To facilitate the processing and manufacturing of the tooth protrusion 4 and improve the production efficiency of the fixed blade, a height T1 of the tooth protrusion is smaller than or equal to the thickness T2 of the base sheet. The tooth protrusion 4 only functions to protect the skin from being scratched and prevent irritation of skin nerves, which can be achieved as long as the tooth protrusion 4 protrudes from the upper end face and/or the lower end face of each cutting tooth 21. Therefore, making the height T1 of the tooth protrusion on the upper end face and/or lower end face of the tooth tip of each cutting tooth 21 smaller than or equal to the thickness T2 of the base sheet not only can reduce the material cost during production and processing, but also can reduce the difficulty in producing the tooth protrusion 4 since it can be integrally formed during the stamping and grinding processes, thereby increasing the production efficiency of the fixed blade. Alternatively, the height T1 of the tooth protrusion may be larger than the thickness T2 of the base sheet, but the thickness T2 of the base sheet may be increased accordingly, causing higher material cost, or increase of difficulty in producing the tooth protrusion 4. Therefore, the implementation according to the present embodiment is preferred.

To improve the safety and skin feeling of the fixed blade in use, the tooth protrusion 4 includes an upper tooth protrusion 41 and a lower tooth protrusion 42 that are respectively located on the upper end face and the lower end face of the tooth tip of each cutting tooth 21. Smooth transitions are respectively provided at a junction between the upper tooth protrusion 41 and the cutting tooth 21, and at a junction between the lower tooth protrusion 42 and the cutting tooth 21. The upper end face and the lower end face of the tooth tip of each cutting tooth 21 of the blade teeth set 2 are respectively provided with the corresponding upper tooth protrusion 41 and the corresponding lower tooth protrusion 42. In use, when the fixed blade contacts the skin, the upper tooth protrusions 41 can contact the skin and stimulate the skin nerves during hair trimming, playing the role of a comb to accelerate the blood circulation and blood oxygen supply of the skin. As a result, it can provide more comfortable skin feeling to the skin and improve the comfort of use of the fixed blade. Furthermore, the lower tooth protrusion 42 can not only prevent the tooth tip of each cutting tooth 21 from piercing the skin so as to improve the safety of the fixed blade, but also prevent cutting teeth 21 of a moving blade from cutting the skin when the moving blade moves back and forth relative to the fixed blade so as to improve the safety of a shaver in use. It may be noted that, the tooth tip of the cutting tooth 21 may be provided only one of the upper tooth protrusion 41 and the lower tooth protrusion 42, which may reduce the function of the fixed blade accordingly. Hence, it is preferred to provide the upper tooth protrusion 41 and the lower tooth protrusion 42 respectively on the upper end face and the lower end face of the tooth tip of each cutting tooth 21 of the blade teeth set 2.

During the actual production process, the upper tooth protrusion 41 may be formed in the following way. The recessed material removal groove 3 is formed on the outer surface of the base sheet 1 by the stamping process with a distance between an edge portion of the material removal groove 3 and an edge portion of the base sheet 1 being controlled. Then, the side of the base sheet 1 provided with the material removal groove 3 is cut by a tooth cutting wheel of the grinder, so that the multiple cutting teeth 21 with the upper tooth protrusions 41 are formed in the material removal groove 3. If no upper tooth protrusion 41 is needed at the tooth tip of each cutting tooth 21, then an outer edge portion of the material removal groove 3 may coincide with the edge portion of the base sheet 1, or may be arranged outside the edge portion of the base sheet 1 to form an open recessed material removal groove 3 on the outer surface of the base sheet 1. As such, there will not be any upper tooth protrusion 41 at the tooth tip of the cutting tooth 21 in the material removal groove 3 in the subsequent tooth cutting process performed by the grinder. The lower tooth protrusion 42 is formed in the following way. A bottom portion of the material removal groove 3 which is recessed downward from the outer surface of the base sheet 1 is ground, with a distance between an edge portion of the grinding wheel and an edge portion of the inner surface of the base sheet 1 being controlled, so as to form the lower tooth protrusion 42. If no lower tooth protrusion 42 is needed, then the grinding wheel is controlled to cover the edge portion of the inner surface of the base sheet 1. The upper tooth protrusion 41 and the lower tooth protrusion 42 may both be provided, or only one of them may be provided, which may be determined according to user needs.

To improve the hair trimming performance of each cutting tooth 21 of the blade teeth set 2, a width T6 of the upper tooth protrusion is smaller than a width T7 of the lower tooth protrusion, when viewed from a projection direction of the tooth tip of each cutting tooth 21. In this way, a projection of the upper tooth protrusion 41 and the lower tooth protrusion 42 is of a truncated pyramid shape which is narrow at the top and wide at the bottom. In this way, the tooth cutting wheel can easily perform the tooth cutting operation to improve the production efficiency of the fixed blade. Furthermore, it is possible to adjust the sharpness of cutting edges on both sides of the cutting tooth 21 by controlling a width ratio of the upper tooth protrusion 41 to the lower tooth protrusion 42, so as to ensure the hair trimming performance of each cutting tooth 21 of the blade teeth set 2. The lower the width ratio of the upper tooth protrusion 41 to the lower tooth protrusion 42, the higher the sharpness of the cutting edges on the both sides of the cutting tooth 21. Conversely, the higher the width ratio of the upper tooth protrusion 41 to the lower tooth protrusion 42, the lower the sharpness of the cutting edges on the both sides of the cutting tooth 21. The specific arrangement may be determined according to actual needs or user requirements.

To improve the fit between the fixed blade and the skin in use, an outer surface of the base sheet 1 is an arc surface, when viewed from a projection direction of either of two ends of the base sheet 1. The base sheet 1 is of an arc shape, and the blade teeth set 2 is at an end of the arc-shaped base sheet 1. In this way, the arc-shaped base sheet 1 can improve the fit between the fixed blade and the skin in use, thereby enhancing the hair trimming efficiency, and further improving the overall aesthetics of a cutter head or a shaving tool. Alternatively, the base sheet 1 may have a flat shape. The fit between the flat fixed blade and the skin may be relatively poor in use, and therefore the arc-shaped base sheet 1 is preferred.

In order to improve the hair shaving performance of the fixed blade, the thickness T3 of each cutting tooth of the blade teeth set 2 is smaller than the thickness T2 of the base sheet, and is larger than or equal to 0.08 mm. The thickness T2 of the base sheet is between 0.3 mm and 2 mm, and may be varied according to different purposes in practice. For example, for the purpose of shaving, the thickness T2 of the base sheet is preferably between 0.35 mm and 0.5 mm. For the purpose of hair cutting, the thickness T2 of the base sheet of the fixed blade may be extended accordingly, and may be 0.5 mm or above in general. The specific selection may be made according to the structure of the fixed blade. In general, for the thickness T2 of the base sheet for shaving, the fixed blade is preferably made of a sheet material having a thickness of 0.35mm or above, so as to minimize the production cost while ensuring the working strength of the fixed blade. In theory, the smaller the thickness of each cutting tooth 21 of the blade teeth set 2, the better the hair shaving effect of the fixed blade. However, to prevent each cutting tooth 21 of the blade teeth set 2 from being twisted, deformed or broken to affect the shaving of the hair, the thickness T3 of each cutting tooth of the blade teeth set 2 may be determined according to the hardness of the base sheet 1, which will be described by means of the following examples.

If the hardness of the base sheet 1 is between 52 HRC and 60 HRC, a thickness of the blade teeth set 2 (which may be regarded as the thickness T3 of each cutting tooth) is preferably 0.13 mm ± 0.03 mm. In this way, the cutting tooth 21 can be prevented from being twisted, deformed, cracked or broken caused by the hair entering a hair guide groove adjacent to the cutting tooth 21, so as to ensure the working stability of each cutting tooth 21 of the blade teeth set 2 and improve the hair trimming performance.

If the hardness of the base sheet 1 is lower than 52 HRC, the flexibility of the base sheet 1 is increased. The thickness of the blade teeth set 2 may be lower than or equal to 0.10 mm, thereby preventing each cutting tooth 21 of the blade teeth set 2 from being cracked or broken.

If the hardness of the base sheet 1 is higher than 60 HRC, the flexibility of the base sheet 1 is decreased accordingly, while the brittleness thereof is increased accordingly. To prevent each cutting tooth 21 of the blade teeth set 2 from being cracked or broken, the thickness T3 of each cutting tooth of the blade teeth set 2 may be increased accordingly. For example, the thickness T3 of each cutting tooth of the blade teeth set 2 may be half, two thirds, or three fourths of the thickness T2 of the base sheet to ensure the performance of the shaving blades in use. The thickness of each cutting tooth 21 of the blade teeth set 2 may be flexibly determined according to the material and hardness of the base sheet 1, which is not further limited in the present embodiment.

To improve the fit between the fixed blade and the skin and the comfort of the skin in hair trimming, a depth T4 of the material removal groove is smaller than the thickness T2 of the base sheet. The material removal groove 3 is recessed downward from the outer surface of the base sheet 1 by a depth smaller than the thickness T2 of the base sheet. In this way, the thickness T3 of each cutting tooth of the blade teeth set 2 can be minimized when grinding an inner surface of the blade teeth set 2 to form a cutting working surface 5, and the working strength of each cutting tooth 21 of the blade teeth set 2 can be ensured by means of a level difference transition surface 6 formed by recessing the material removal groove 3 from the outer surface of the base sheet 1, thereby improving the hair trimming performance and effect of the fixed blade. Furthermore, the depth T4 of the material removal groove smaller than the thickness T2 of the base sheet allows less thrust to be applied to the skin by the outer surface of the base sheet 1 when an outer surface of each cutting tooth 21 of the blade teeth set 2 (i.e. a bottom groove surface of the material removal groove 3) contacts the skin, thereby effectively enhancing the fit between the shaving blades and the skin and the comfort of use.

The smaller the thickness of each cutting tooth 21 of the blade teeth set 2, the larger a grinding amount on an inner surface of the cutting tooth 21 of the blade teeth set 2. Conversely, the larger the thickness of the blade teeth set 2, the smaller the grinding amount on the inner surface of the cutting tooth 21 of the blade teeth set 2. Therefore, in actual production, the depth T4 of the material removal groove (i.e. a depth by which the blade teeth set 2 is recessed from the outer surface of the base sheet 1) may be determined according to the actual thickness of each cutting tooth 21 of the blade teeth set 2, which will be described by means of the following examples.

When the thickness T3 of each cutting tooth of the blade teeth set 2 is required to be smaller than 0.10 mm, the amount of grinding the inner surface of the cutting tooth 21 of the blade teeth set 2 is relatively large. To ensure the working strength of the cutting tooth 21 of the blade teeth set 2, the depth T4 of the material removal groove may be reduced to some extent (an optimal depth T4 of the material removal groove may be smaller than half of the thickness T2 of the base sheet 1). When grinding the inner surface of the blade teeth set 2 (which may be also regarded as an inner surface of the material removal groove 3), the level difference transition surface 6 between the material removal groove 3 and the base sheet 1 will be ground little, so that the level difference transition surface 6 can support tooth roots of the cutting teeth 21 of the blade teeth set 2, to ensure the working strength of the cutting teeth 21 of the blade teeth set 2.

When the thickness of each cutting tooth 21 of the blade teeth set 2 is larger than 0.20 mm, the amount of grinding the inner surface of the cutting tooth 21 of the blade teeth set 2 is relatively small. In this case, the recession depth of the material removal groove 3 on the outer surface of the base sheet 1 may be increased to some extent. For example, the depth T4 of the material removal groove may be larger than the thickness T2 of the base sheet, or may be larger than two thirds, half, etc. of the thickness T2 of the base sheet. The working strength of the cutting teeth 21 of the blade teeth set 2 can also be ensured in this way. The height difference between a bottom plane of the material removal groove 3 (which may be regarded as the outer surface of the cutting teeth 21 of the blade teeth set 2) and the outer surface of the base sheet 1 may be increased accordingly. When the outer surface of the blade teeth set 2 contacts the skin, the outer surface of the base sheet 1 may apply a pushing force on the skin, which affects the fit between the blade teeth set 2 and the skin, and the contact feeling of the skin is relatively poor. Therefore, it is a preferred implementation that the depth T4 of the material removal groove 3 recessed on the base sheet 1 is smaller than the thickness T2 of the base sheet.

The blade teeth set 2 is formed by tooth cutting operation based on the material removal groove 3. To improve the hair trimming efficiency of the fixed blade, the material removal groove 3 is provided on the edge of each of two opposite sides of the base sheet 1, and the tooth cutting operation is performed on a side of each material removal groove 3 to form the blade teeth set 2 on each of the two opposite sides of the base sheet 1. The thickness T3 of each cutting tooth 21 of the blade teeth set 2 is smaller than the thickness T2 of the base sheet. To prevent the two sides, where the blade teeth sets 2 are provided, of the fixed blade from being twisted and deformed in use, a length of the blade teeth set 2 (which may be regarded as a length of the material removal groove 3) is smaller than a length of the base sheet 1, and distances T5 from two ends of the blade teeth set 2 respectively to edges of the two ends of the base sheet 1 range from 3 mm to 10 mm, and are preferably 5 mm. In use, the blade teeth sets 2 on the both sides of the base sheet 1 can be supported due to the distances T5 to the edges, to prevent the cutting teeth 21 of the blade teeth set 2 from being twisted and deformed in use, thereby ensuring the overall working strength and stability of the fixed blade. If the distances T5 ranging from 3 mm to 10 mm to the edges are not provided at the two ends of the base sheet 1, that is, if the both sides of the base sheet 1 are completely provided with the cutting teeth 21, the cutting teeth 21 can only be connected to the base sheet 1 through the tooth roots. As a result, the cutting teeth 21 may be easily twisted or deformed in use, which severely affects the operational performance and working stability of the fixed blade. Certainly, the distances T5 at the edges of the two ends of the base sheet 1 may be larger. For example, distances T5 of 15 mm, 20 mm or larger may be reserved. However, the increased distances T5 may correspondingly reduce the number of the cutting teeth 21 of the blade teeth set 2, reducing the hair shaving efficiency. Therefore, it is an optimal implementation that the distances T5 at the edges of the two ends of the base sheet 1 range from 3 mm and 10 mm. As such, the working strength of the cutting teeth 21 of the blade teeth set 2 can be ensured, without need to increase the thickness of the base sheet 1 to ensure the working strength of the fixed blade, thereby reducing the material cost of the fixed blade.

During the production and manufacturing processes, to easily control the thickness T3 of the cutting teeth of the blade teeth set 2 to be smaller than the thickness T2 of the base sheet, and to improve the hair trimming efficiency, the material removal groove 3 includes an upper material removal groove 31 and a lower material removal groove 32. The upper material removal groove 31 is provided on the outer surface of the base sheet 1, so that the upper tooth protrusion 41 is formed on the upper end face of the tooth tip of each cutting tooth 21 of the blade teeth set 2. The upper material removal groove 31 is integrally formed on the base sheet 1 by stamping. When forming the upper material removal groove 31, an outer surface of the upper material removal groove 31 is lower than the outer surface of the base sheet 1, and an inner surface of the upper material removal groove 31 protrudes from the inner surface of the base sheet 1. Then, the tooth cutting wheel performs tooth cutting operation on one side of the base sheet 1 to form the blade teeth set 2, consisting of the multiple cutting teeth 21, at the upper material removal groove 31. At this time, the outer surface of the upper material removal groove 31 forms the outer surface of each cutting tooth 21. During the actual production process, by controlling a distance between an outer side edge of the upper material removal groove 31 and an edge portion of the base sheet 1, a width of the upper tooth protrusion 41 may be controlled, or the upper tooth protrusion 41 may even not be formed on the upper end face of each cutting tooth 21. In the latter case, the outer side edge of the upper material removal groove 31 may simply overlap or exceed the edge portion of the base sheet 1. In this way, the upper material removal groove 31 formed on the outer surface of the base sheet 1 is open on one side. Whether it is necessary to reserve the upper tooth protrusion 41, or how much of the width of the reserved upper tooth protrusion 41 is reserved, it may be simply achieved by adjusting a position of an insert in the stamping die for the upper tooth protrusion 31. The lower material removal groove 32 is provided on the inner surface of the base sheet 1, so that the thickness T3 of each cutting tooth of the blade teeth set 2 is smaller than the thickness T2 of the base sheet and the lower tooth protrusion 42 is formed on the lower end face of the tooth tip of the cutting tooth 21 of the blade teeth set 2. After the upper material removal groove 31 is formed by stamping, the inner surface of the upper material removal groove 31 protrudes from the inner surface of the base sheet 1. At this time, the inner surface of the upper material removal groove 31 protruding from the inner surface of the base sheet 1 is ground by the grinding equipment, so as to form the cutting working surface 5 while reducing the thickness T3 of each cutting tooth, thereby improving the hair trimming effect. When grinding the bottom of the upper material removal groove 31, the lower tooth protrusion 42 may be formed on the lower end face of each cutting tooth 21 by using a distance between the grinding wheel and a side wall of the base sheet 1. The presence or absence of the lower tooth protrusion 42 on the lower end face of each cutting tooth 21 and the width of the lower tooth protrusion 42 can be achieved by adjusting the distance between the wheel of the grinding equipment and the side wall of the base sheet 1.

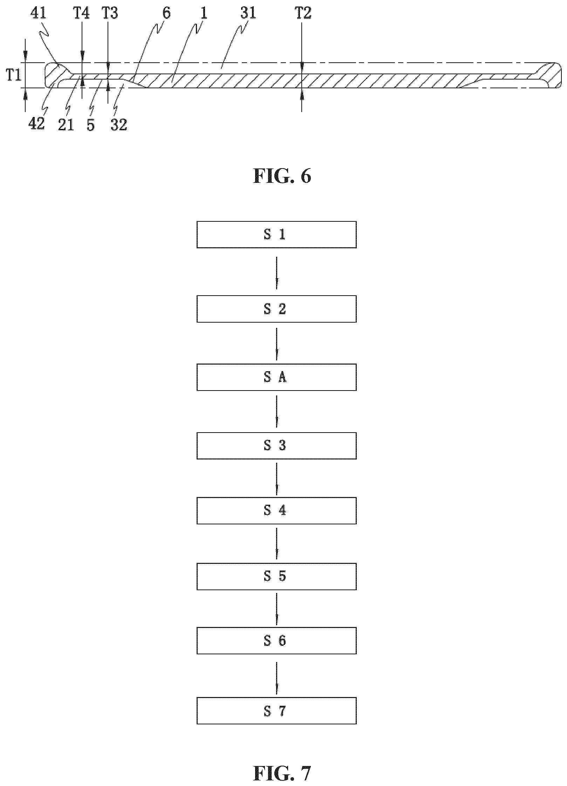

As shown in FIG. 7, to facilitate the production and manufacturing of the fixed blade, a method for manufacturing the fixed blade is further provided according to the present application, including the following steps.

In a material selection step S1, a metallic material is selected, which is heat-treatable and has a thickness corresponding to user needs or design requirements. The metallic material may be a martensitic stainless steel sheet or plate material. Furthermore, the metallic material has a hardness between 160 HV and 220 HV. The fixed blade is to be in contact with the skin. The skin may secrete oil or sweat, and the fixed blade may be washed by water after the hair trimming. The stainless steel has relatively high corrosion resistance to effectively avoid the fixed blade from corrosion by the oil or the sweat, or rusting during washing, thereby ensuring the safety and hygiene performance of the fixed blade in use. Certainly, other metallic material may be used, such as ordinary iron sheets, copper sheets and the like. However, the ordinary iron sheets or copper sheets have poor corrosion resistance. Therefore, it is a preferred implementation to use the stainless steel material. The hardness of the martensitic stainless steel is limited between 160 HV and 220 HV mainly in consideration of the subsequent stamping. If the Vickers hardness of the martensitic stainless steel raw material is relative low, and is lower than 160 HV, then secondary deformation may easily occur after stamping. If the Vickers hardness of the martensitic stainless steel raw material is relatively high, and is higher than 220 HV, then a fixed blade blank may easily crack during stamping. Therefore, it is a preferred implementation to limit the hardness of the martensitic stainless steel between 160 HV and 220 HV.

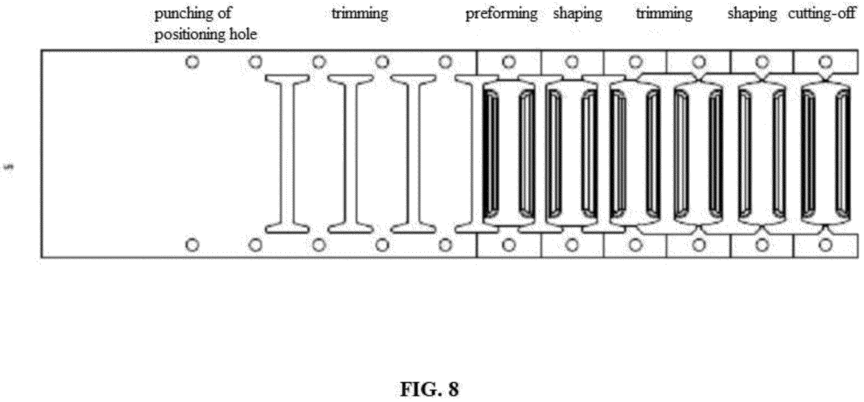

In a stamping and forming step S2, the stainless steel sheet or strip is fed into a stamping die, and stamping equipment stamps the metallic material to form a fixed blade blank that has a size satisfying a requirement for the fixed blade, and has the material removal groove 3 at an edge of at least one side of the fixed blade blank. As shown in FIG. 8, during the actual production process, the stamping die is a progressive die, and the metal sheet or strip is successively subject to the punching operation for positioning holes, edge cutting operation, preforming operation, shaping operation, trimming operation and cutting-off operation to form the upper material removal grooves 31 on both sides of the fixed blade blank.

In order to remove the oil contamination on a surface of the fixed blade blank during the stamping process, and prevent the oil contamination from forming an oil film layer on the surface of the fixed blade during heat treatment to affect the appearance of the fixed blade, the fixed blade blank needs to be cleaned and dried before heat treatment. Certainly, the fixed blade blank may be dried in the air, which may take a long time and significantly affect the production progress of the fixed blade. Therefore, it is an optimal implementation to dry the fixed blade blank after cleaning it.

In a cleaning and drying step SA, the cleaning equipment is a three-tank ultrasonic cleaner. 60 L to 100 L of pure water, 0.5 kg to 1.5 kg of degreasing powder, and 0.5 kg to 1.5 kg of metal cleaner are added into a first cleaning tank of the ultrasonic cleaner and evenly mixed, and are heated to 55 °C to 80 °C. The fixed blade blank is cleaned for 150 seconds to 200 seconds, and is then placed into a second cleaning tank. Pure water is added into the second cleaning tank, and heated to 30 °C to 35 °C. The fixed blade blank is cleaned for 90 seconds to 150 seconds, and is then placed into a third cleaning tank. Pure water is added into the third cleaning tank and heated to 30 °C to 35 °C. The fixed blade blank is cleaned for 90 seconds to 150 seconds, and is then placed into a bellows dryer. The fixed blade blank is dried at a temperature of 40 °C to 80 °C for 30 minutes to 90 minutes. In this way, the surface of the fixed blade blank is ensured to be clean and dry.

In a heat treatment step S3, the fixed blade blank cleaned and dried is fed into a heater for quenching. The heater is a vacuum heat treatment furnace. The fixed blade blank is fed into the vacuum heat treatment furnace, in which a temperature is increased to 1000 °C to 1100 °C and kept for 40 minutes to 100 minutes. Then nitrogen is introduced into the furnace, and the fixed blade blank is cooled to a room temperature within 40 minutes to 80 minutes, so that the hardness of the fixed blade blank is increased to 52 HRC to 60 HRC. The vacuum heat treatment furnace can effectively prevent oxidation, decarburization and carburization of the fixed blade blank during the heat treatment process, so that the surface of the fixed blade is bright, and the hardness of the fixed blade blank is increased. Certainly, considering the operating functions, an ordinary heating furnace can also be used to improve the hardness of the fixed blade blank. However, the ordinary heating furnace may cause reduction reaction between the surface of the fixed blade blank and oxygen, which degrades the appearance of the surface of the fixed blade blank. Furthermore, the oxidized skin produced on the surface of the fixed blade blank may affect the hardness of the fixed blade blank. Hence, the vacuum heat treatment process is preferred. The hardness of the fixed blade blank is increased to between 52 HRC and 60 HRC by the vacuum heat treatment process, which is mainly in consideration of the subsequent tooth cutting process, so as to prevent the fixed blade blank from being twisted or deformed during the tooth cutting process, thereby improving the production efficiency and yield rate of the tooth cutting process and reducing the production cost.

In a tooth cutting step S4, tooth cutting is performed by tooth cutting equipment on a side of the material removal groove 3 at an edge of the fixed blade blank, to form a semi-finished fixed blade with multiple cutting teeth 21 that are arranged on the side of the material removal groove 3 and are spaced apart. The tooth cutting equipment is a grinder. The tooth cutting is performed at the edge of the fixed blade blank by a tooth cutting wheel of the grinder to form the semi-finished fixed blade, and the tooth cutting depth is close to an inner side wall of material removal groove 3. During the tooth cutting process, a grit number of the tooth cutting wheel is between 220 grit and 260 grit, thereby ensuring the smoothness of walls of both sides of each cutting tooth 21. A linear speed of the tooth cutting wheel is 30 meters per minute to 55 meters per minute, and is preferably 35 meters per minute.

The step S5 is polishing. After the semi-finished fixed blade is formed by stamping and tooth cutting, edges of the fixed blade are relatively sharp, which may easily scratch the skin in use. Therefore, the edges of the semi-finished fixed blade are rounded or chamfered by polishing equipment, and an outer surface of the semi-finished fixed blade is polished by the polishing equipment, so that a surface of the semi-finished fixed blade is relatively bright, thereby improving the overall appearance of the semi-finished fixed blade. Preferably, to improve the chamfering and polishing effect, the polishing equipment is a cylinder polishing machine. During cylinder polishing, a cylinder rotation speed is 40 revolutions per minute to 90 revolutions per minute, and is preferably 55 revolutions per minute. A cylinder polishing material is high alumina porcelain with a size of 6 mm by 6 mm to 10 mm by 10 mm (6*6mm to 10*10mm), and is preferably high alumina porcelain with a size of 6 mm by 6 mm (6*6mm). The cylinder polishing material may be replaced by brown corundum of the same size.

In a grinding step S6, the lower end face of each cutting tooth 21 (which may be regarded as a bottom end face of the material removal groove 3) is ground to form the lower material removal groove 32, and form the cutting working surface 5 on the inner surface of the base sheet 1, so as to finally form a finished fixed blade. During grinding, a grit number of the grinding wheel is between 100 grit and 180 grit, and a linear speed of the wheel is between 32 meters per minutes and 36 meters per minutes, so that the flatness of the cutting working surface 5 is lower than or equal to 0.02, and the roughness of the cutting working surface 5 is lower than or equal to 0.6.

In a cleaning and drying step S7, the cleaning equipment is a three-tank ultrasonic cleaner. 60 L to 100 L of pure water, 0.5 kg to 1.5 kg of degreasing powder, and 0.5 kg to 1.5 kg of metal cleaning agent are added into a first cleaning tank of the cleaner and evenly mixed, and are heated to 55 °C to 80 °C. The finished fixed blade is cleaned for 150 seconds to 200 seconds, and is then placed into a second cleaning tank. Pure water is added into the second cleaning tank, and heated to 30 °C to 35 °C. The finished fixed blade is cleaned for 90 seconds to 150 seconds, and is then placed into a third cleaning tank. Pure water is added into the third cleaning tank and heated to 30 °C to 35 °C. The finished fixed blade is cleaned for 90 seconds to 150 seconds, and is then placed into a bellows dryer. The finished fixed blade is dried at 40 °C to 80 °C for 30 minutes to 90 minutes. In this way, a surface of the finished fixed blade is ensured to be clean and dry. Then, the finished fixed blade is inspected and packaged, thereby completing the entire production process of the fixed blade.

### First Example

A martensitic stainless steel strip coil with a hardness of 200 HV is placed on an automatic feeding rack. An end of the strip coil is fed into the progressive die, and is subject to the positioning hole punching operation, edge cutting operation, preforming operation, shaping operation, trimming operation and cutting-off operation to form the fixed blade blank. The fixed blade blank is placed into the three-tank ultrasonic cleaner. 80 L of pure water, 1 kg of degreasing powder, and 1 kg of metal cleaning agent are added into the first cleaning tank of the cleaner and are evenly mixed, and are heated to 65 °C. The fixed blade blank is cleaned for 180 seconds, and is then placed into the second cleaning tank. Pure water is added into the second cleaning tank, and heated to 35 °C. The fixed blade blank is cleaned for 120 seconds, and is then placed into the third cleaning tank. Pure water is added into the third cleaning tank and heated to 30 °C. The fixed blade blank is cleaned for 150 seconds and then taken out. Then the fixed blade blank is placed into the bellows dryer. The fixed blade blank is dried at 60 °C for 45 minutes and then taken out. Then the fixed blade blank is fed into the vacuum heat treatment furnace, in which the temperature is increased to 1020 °C and kept for 75 minutes. Then nitrogen is introduced into the vacuum heat treatment furnace for cooling, and the fixed blade blank is placed for 65 minutes, cooled to the room temperature and taken out. Then the fixed blade blank is fed to the grinder for tooth cutting. The tooth cutting wheel with 220 grit is selected, and the linear speed of the tooth cutting wheel is adjusted to be 35 meters per minute. The tooth cutting wheel cuts both sides of the fixed blade blank by a depth close to the inner side wall of the material removal groove 3. After tooth cutting, the semi-finished fixed blade is placed into the cylinder polisher. The cylinder rotation speed is adjusted to be 55 revolutions per minute, and a cylinder polishing material, which is high alumina porcelain of a size of 6 mm by 6 mm, is placed into the cylinder polisher. The cylinder polishing is performed on the semi-finished fixed blade for 180 minutes. Then the semi-finished fixed blade is taken out and fed into the grinder again. The grinding wheel with 180 grit is selected, and the linear speed of the grinding wheel is adjusted to be 35 meters per minute. The grinding wheel grinds the inner surface of the fixed blade to form the cutting working surface 5 and the lower tooth protrusion 42, thereby forming the final finished product. Finally, the finished fixed blade is placed into the three-tank ultrasonic cleaner. 100 L of pure water, 0.5 kg of degreasing powder, and 1 kg of metal cleaning agent are added into the first cleaning tank of the cleaner and are evenly mixed, and are heated to 55 °C. The finished fixed blade is cleaned for 150 seconds, and is then placed into the second cleaning tank. Pure water is added into the second cleaning tank, and heated to 30 °C. The finished fixed blade is cleaned for 90 seconds, and is then placed into the third cleaning tank. Pure water is added into the third cleaning tank and heated to 30 °C. The finished fixed blade is cleaned for 120 seconds and then taken out. Then the finished fixed blade is inspected and packaged to complete the production of the fixed blade.

### Second Example

A martensitic stainless steel strip coil with a hardness of 180 HV is placed on an automatic feeding rack. An end of the strip coil is fed into the progressive die, and is subject to the positioning hole punching operation, edge cutting operation, preforming operation, shaping operation, trimming operation and cutting-off operation to form the fixed blade blank. The fixed blade blank is placed into the three-tank ultrasonic cleaner. 100 L of pure water, 1.5 kg of degreasing powder, and 1.5 kg of metal cleaning agent are added into the first cleaning tank of the cleaner and are evenly mixed, and are heated to 80 °C. The fixed blade blank is cleaned for 150 seconds, and is then placed into the second cleaning tank. Pure water is added into the second cleaning tank, and heated to 30 °C. The fixed blade blank is cleaned for 100 seconds, and is then placed into the third cleaning tank. Pure water is added into the third cleaning tank and heated to 30 °C. The fixed blade blank is cleaned for 100 seconds and then taken out. Then the fixed blade blank is placed into the bellows dryer. The fixed blade blank is dried at 80 °C for 35 minutes and then taken out. Then the fixed blade blank is fed into the vacuum heat treatment furnace, in which the temperature is increased to 1060 °C and kept for 60 minutes. Then nitrogen is introduced into the vacuum heat treatment furnace for cooling, and the fixed blade blank is placed for 80 minutes, cooled to the room temperature and taken out. Then the fixed blade blank is fed to the grinder for tooth cutting. The tooth cutting wheel with 240 grit is selected, and the linear speed of the tooth cutting wheel is adjusted to be 30 meters per minute. The tooth cutting wheel cuts both sides of the fixed blade blank by a depth close to the inner side wall of the material removal groove 3. After tooth cutting, the semi-finished fixed blade is placed into the cylinder polisher. The cylinder rotation speed is adjusted to be 70 revolutions per minute, and a cylinder polishing material, which is high alumina porcelain of a size of 8 mm by 8 mm, is placed into the cylinder polisher. The cylinder polishing is performed on the semi-finished fixed blade for 200 minutes. Then the semi-finished fixed blade is taken out and fed into the grinder again. The grinding wheel with 160 grit is selected, and the linear speed of the grinding wheel is adjusted to be 32 meters per minute. The grinding wheel performs grinding to the inner surface of the fixed blade to form the cutting working surface 5 and the lower tooth protrusion 42, thereby forming the final finished product. Finally, the finished fixed blade is placed into the three-tank ultrasonic cleaner. 80 L of pure water, 0.8 kg of degreasing powder, and 0.6 kg of metal cleaning agent are added into the first cleaning tank of the ultrasonic cleaner and are evenly mixed, and are heated to 60 °C. The finished fixed blade is cleaned for 130 seconds, and is then placed into the second cleaning tank. Pure water is added into the second cleaning tank, and heated to 32 °C. The finished fixed blade is cleaned for 100 seconds, and is then placed into the third cleaning tank. Pure water is added into the third cleaning tank and heated to 35 °C. The finished fixed blade is cleaned for 110 seconds and then taken out. Then the finished fixed blade is inspected and packaged to complete the production of the fixed blade.

### Third Example

A martensitic stainless steel strip coil with a hardness of 220 HV is placed on an automatic feeding rack. An end of the strip coil is fed into the progressive die, and is subject to the positioning hole punching operation, edge cutting operation, preforming operation, shaping operation, trimming operation and cutting-off operation to form the fixed blade blank. The fixed blade blank is placed into the three-tank ultrasonic cleaner. 60 L of pure water, 0.8 kg of degreasing powder, and 1.2 kg of metal cleaning agent are added into the first cleaning tank of the ultrasonic cleaner and are evenly mixed, and are heated to 60 °C. The fixed blade blank is cleaned for 150 seconds, and is then placed into the second cleaning tank. Pure water is added into the second cleaning tank, and heated to 30 °C. The fixed blade blank is cleaned for 100 seconds, and is then placed into the third cleaning tank. Pure water is added into the third cleaning tank and heated to 30 °C. The fixed blade blank is cleaned for 140 seconds and then taken out. Then the fixed blade blank is placed into the bellows dryer. The fixed blade blank is dried at 45 °C for 75 minutes and then taken out. Then the fixed blade blank is fed into the vacuum heat treatment furnace, in which the temperature is increased to 1100 °C and kept for 50 minutes. Then nitrogen is introduced into the vacuum heat treatment furnace for cooling, and the fixed blade blank is placed for 70 minutes, cooled to the room temperature and taken out. Then the fixed blade blank is fed to the grinder for tooth cutting. The tooth cutting wheel with 260 grit is selected, and the linear speed of the tooth cutting wheel is adjusted to be 50 meters per minute. The tooth cutting wheel cuts both sides of the fixed blade blank by a depth close to the inner side wall of the material removal groove 3. After tooth cutting, the semi-finished fixed blade is placed into the cylinder polisher. The cylinder rotation speed is adjusted to be 75 revolutions per minute, and a cylinder polishing material, which is high alumina porcelain of a size of 10 mm by 10 mm, is placed into the cylinder polisher. The cylinder polishing is performed on the semi-finished fixed blade for 210 minutes. Then the semi-finished fixed blade is taken out and fed into the grinder again. The grinding wheel with 180 grit is selected, and the linear speed of the grinding wheel is adjusted to be 36 meters per minute. The grinding wheel performs grinding to the inner surface of the fixed blade to form the cutting working surface 5 and the lower tooth protrusion 42, thereby forming the final finished product. Finally, the finished fixed blade is placed into the three-tank ultrasonic cleaner. 100 L of pure water, 1.2 kg of degreasing powder, and 1.2 kg of metal cleaning agent are added into the first cleaning tank of the cleaner and are evenly mixed, and are heated to 75 °C. The finished fixed blade is cleaned for 120 seconds, and is then placed into the second cleaning tank. Pure water is added into the second cleaning tank, and heated to 35 °C. The finished fixed blade is cleaned for 140 seconds, and is then placed into the third cleaning tank. Pure water is added into the third cleaning tank and heated to 30 °C. The finished fixed blade is cleaned for 130 seconds and then taken out. Then the finished fixed blade is inspected and packaged to complete the production of the fixed blade.

The above embodiments should not be construed as limitations to the present application. Any improvements made based on the spirit of the present application are deemed to fall into the protection scope of the present application.

## Claims

1. A fixed blade, comprising a base sheet, wherein
a blade teeth set, which consists of a plurality of cutting teeth, is provided on an edge of at least one side of the base sheet; and
a material removal groove is provided on an upper end face and/or a lower end face of the base sheet, such that a thickness of each cutting tooth of the blade teeth set is smaller than a thickness of the base sheet, and such that a tooth protrusion is formed on an upper end face and/or a lower end face of a tooth tip of each cutting tooth of the blade teeth set.

2. The fixed blade according to claim 1, wherein a height of the tooth protrusion is smaller than or equal to the thickness of the base sheet.

3. The fixed blade according to claim 1, wherein
the tooth protrusion comprises an upper tooth protrusion and a lower tooth protrusion that are respectively provided on the upper end face and the lower end face of the tooth tip of each cutting tooth; and
smooth transitions are respectively provided at a junction between the upper tooth protrusion and the cutting tooth, and at a junction between the lower tooth protrusion and the cutting tooth.

4. The fixed blade according to claim 3, wherein a width of the upper tooth protrusion is smaller than a width of the lower tooth protrusion when viewed from a projection direction of the tooth tip of each cutting tooth.

5. The fixed blade according to claim 1, wherein an outer surface of the base sheet is an arc surface when viewed from a projection direction of any one of two ends of the base sheet.

6. The fixed blade according to claim 1, wherein the thickness of each cutting tooth of the blade teeth set is smaller than the thickness of the base sheet, and is larger than or equal to 0.08 mm.

7. The fixed blade according to claim 1, wherein a depth of the material removal groove is smaller than the thickness of the base sheet.

8. The fixed blade according to claim 1, wherein
the blade teeth set is provided on the edge of each of two opposite sides of the base sheet, and has a length smaller than a length of the base sheet; and
distances from two ends of the blade teeth set respectively to edges of two ends of the base sheet range from 3 mm to 10 mm.

9. The fixed blade according to any one of claims 1 to 8, wherein
the material removal groove comprises an upper material removal groove and a lower material removal groove;
the upper material removal groove is provided on an outer surface of the base sheet, so that an upper tooth protrusion is formed on the upper end face of the tooth tip of each cutting tooth of the blade teeth set; and
the lower material removal groove is provided on an inner surface of the base sheet, so that the thickness of each cutting tooth of the blade teeth set is smaller than the thickness of the base sheet and a lower tooth protrusion is formed on the lower end face of the tooth tip of the cutting tooth of the blade teeth set.

10. A method for manufacturing the fixed blade according to any one of claims 1 to 9, comprising the following steps:
a material selection step S1: selecting a metallic material, which is heat-treatable and has a thickness, according to user needs or design requirements;
a stamping step S2: feeding the metallic material into a stamping die, and stamping, by stamping equipment, the metallic material to form a fixed blade blank that has a size satisfying a requirement for the fixed blade and that has the material removal groove at an edge of at least one side of the fixed blade blank;
a heat treatment step S3: feeding the fixed blade blank into a heater for quenching to increase a hardness of the fixed blade blank;
a tooth cutting step S4: performing, by tooth cutting equipment, tooth cutting operation on a side of the material removal groove at the edge of the fixed blade blank, to form a semi-finished fixed blade with a plurality of cutting teeth formed on the side of the material removal groove and arranged at intervals;
a polishing step S5: rounding or chamfering, by polishing equipment, edges of the semi-finished fixed blade, and polishing, by the polishing equipment, an outer surface of the semi-finished fixed blade; and
a grinding step S6: grinding the lower end face of each cutting tooth to form a cutting working surface and finally form a finished fixed blade.

11. The method for manufacturing the fixed blade according to claim 10, wherein in step S1, a martensitic stainless steel is selected as the metallic material, and the martensitic stainless steel has a hardness ranging from 160 HV to 220 HV.

12. The method for manufacturing the fixed blade according to claim 10, wherein a cleaning and drying step SA is further provided after the step S2 and before the step S3,
in the cleaning and drying step, cleaning equipment removes oil contamination from a surface of the fixed blade blank, and drying equipment dries the surface of the fixed blade blank.

13. The method for manufacturing the fixed blade according to claim 12, wherein
the cleaning equipment is a three-tank ultrasonic cleaner; and
the cleaning and drying step SA comprises the following steps:
adding and evenly mixing 60 L to 100 L of pure water, 0.5 kg to 1.5 kg of degreasing powder, and 0.5 kg to 1.5 kg of metal cleaning agent in a first cleaning tank of the cleaner, heating to 55 °C to 80 °C, cleaning the fixed blade blank for 150 seconds to 200 seconds, and placing the fixed blade blank into a second cleaning tank;
adding pure water into the second cleaning tank, heating to 30 °C to 35 °C, cleaning the fixed blade blank for 90 seconds to 150 seconds, and placing the fixed blade blank into a third cleaning tank; and
adding pure water into the third cleaning tank, heating to 30 °C to 35 °C, cleaning the fixed blade blank for 90 seconds to 150 seconds, placing the fixed blade blank into a bellows dryer, and drying the fixed blade blank at a temperature of 40 °C to 80 °C for 30 minutes to 90 minutes.

14. The method for manufacturing the fixed blade according to claim 10, wherein in the step S3, the heater is operated to quench the fixed blade blank so as to increase the hardness of the fixed blade blank to a range from 52 HRC to 60 HRC.

15. The method for manufacturing the fixed blade according to claim 10, wherein
the heater in the step S3 is a vacuum heat treatment furnace; and
the step S3 comprises:
feeding the fixed blade blank into the vacuum heat treatment furnace, increasing a temperature in the furnace to 1000 °C to 1100 °C and keeping the temperature for 40 minutes to 100 minutes; and
then introducing nitrogen into the furnace, and cooling the fixed blade blank to a room temperature within 40 minutes to 80 minutes.

16. The method for manufacturing the fixed blade according to claim 10, wherein the tooth cutting equipment in the step S4 is a grinder, a grit number of a tooth cutting wheel is between 220 grit and 260 grit, and a linear speed of the tooth cutting wheel is 30 meters per minute to 55 meters per minute.

17. The method for manufacturing the fixed blade according to claim 10, wherein
the polishing equipment in the step S5 is a cylinder polishing machine; and
during cylinder polishing, a cylinder rotation speed is 40 revolutions per minute to 90 revolutions per minute, and a cylinder polishing material is brown corundum having a size of 6 mm by 6 mm to 10 mm by 10 mm.

18. The method for manufacturing the fixed blade according to claim 10, wherein
in the step S6, a grinder is operated to grind the lower end face of each cutting tooth to form the cutting working surface on an inner surface of the semi-finished fixed blade;
the cutting working surface has a flatness less than or equal to 0.02, and a roughness less than or equal to 0.6; and
a grit number of a grinding wheel is between 100 grit and 180 grit, and a linear speed of the grinding wheel during the grinding is 32 meters per minute to 36 meters per minute.

19. The method for manufacturing the fixed blade according to any one of claims 11 to 18, wherein another cleaning and drying step S7 is further provided after the step S6, and the another cleaning and drying step S7 is the same as the cleaning and drying step SA.
